# EUROPÄISCHE PATENTSCHRIFT

(11) **EP 1 343 829 B1**
(45) Veröffentlichungstag und Bekanntmachung des Hinweises auf die Patenterteilung: **11.01.2006**
(21) Anmeldenummer: 01991824.2
(22) Anmeldetag: 11.12.2001
(51) Int. Cl.: C08F 10/10, C08F 4/06, C08F 4/12, C08F 4/16, C08F 4/00

(54) **VERFAHREN ZUR HERSTELLUNG VON POLYISOBUTENEN**
METHOD FOR PRODUCING POLYISOBUTENES
PROCEDE DE PRODUCTION DE POLYISOBUTENES

(30) Priorität: 12.12.2000 DE 10061727
(43) Veröffentlichungstag der Anmeldung: 17.09.2003
(73) Patentinhaber: BASF Aktiengesellschaft, 67056 Ludwigshafen (DE)
(72) Erfinder: LANGE, Arno, 67098 Bad Dürkheim (DE); RATH, Hans, Peter, 67269 Grünstadt (DE)
(74) Vertreter: Pohl, Michael Friedrich
(86) Internationale Anmeldenummer: PCT/EP2001/014545
(87) Internationale Veröffentlichungsnummer: WO 2002/048215

(56) Entgegenhaltungen:
- EP-A- 0 279 456
- EP-A- 0 556 965
- EP-A- 0 558 187
- EP-A- 0 652 233
- EP-A- 0 713 883
- US-A- 4 568 732
- US-A- 5 286 823

## Beschreibung

Die vorliegende Erfindung betrifft ein Verfahren zur Herstellung von Polyisobutenen, worin wenigstens 60 mol-% der Polymerketten wenigstens eine olefinisch ungesättigte Endgruppe aufweisen.

Polyisobutene mit einem hohen Gehalt an olefinisch ungesättigten Endgruppen sind wichtige Ausgangsprodukte für die Herstellung von modernen Kraftstoff- und Schmierstoffadditiven mit Detergens-Wirkung. Die olefinisch ungesättigten Endgruppen in diesen Kohlenwasserstoffpolymeren werden zur Einführung der für diesen Additivtyp üblichen polaren Endgruppen genutzt.

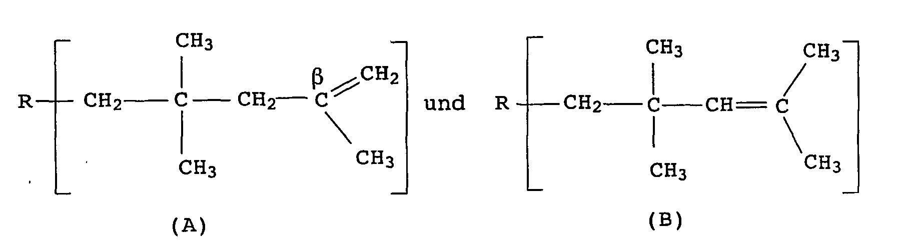

Die Herstellung olefinterminierter Polyisobutene geschieht in der Regel durch kationische Polymerisation von Isobuten oder isobutenhaltigen Kohlenwasserstoffströmen in Gegenwart von Bortrifluorid-Komplex-Katalysatoren. Verfahren hierzu sind im Stand der Technik umfassend beschrieben (siehe beispielsweise DE-A 27 02 604, EP-A 145 235, EP-A 481 297, EP 671 419, EP-A 628 575, EP-A 807 641 und WO 99/31151).

Die auf diese Weise hergestellten Polyisobutene weisen einen hohen Gehalt an olefinisch ungesättigten Endgruppen, inbesondere Endgruppen der allgemeinen Formel (A) auf. Die Breite der Molekulargewichtsverteilung ist jedoch für moderne Kraftstoffadditive nicht immer zufriedenstellend. Aus den Polymerisationsprodukten dieser Umsetzungen lassen sich zwar Polyisobutene mit engerer Molekulargewichtsverteilung, beispielsweise durch Aufreinigung der Polymerisationsprodukte, gewinnen, jedoch sind diese Maßnahmen für eine wirtschaftliche Nutzung zu aufwendig.

Kennedy beschreibt in US 4,316,973 ein Verfahren zur Herstellung von telechelen Polyisobutenen mit olefinisch ungesättigten Endgruppen, umfassend die basische Eliminierung der entsprechenden Halogen-terminierten telechelen Polyisobutene. Ihre Herstellung erfolgt durch Umsetzung von Isobuten in Gegenwart einer Lewis-Säure und einem Benzylhalogenid oder einem Alkylhalogenid. Für eine wirtschaftliche Herstellung olefin-terminierter Polyisobutene erscheint diese zweistufige Vorgehensweise jedoch nicht geeignet. Ähnliche Polymerisationsverfahren sind aus der EP-A 206 756, US 4,276,394 und US 4,524,188 bekannt.

Die Polymerisation von Iso-Olefinen oder Vinylaromaten in Gegenwart von Metall- oder Halbmetallhalogeniden als Lewis-Säure-Katalysatoren und tert.-Alkylhalogeniden, Benzyl- oder Allylhalogeniden, -estern oder -ethern als Initiatoren wird auch als "lebende kationische Polymerisation" bezeichnet. Eine umfassende Übersicht hierzu findet man in Kennedy/Ivan "Carbocationic Macromolecular Engineering", Hauser Publishers 1992.

Dort, und in den vorgenannten Schriften, wird die Lewis-Säure stets in molarem Überschuss bezogen auf das Initiator-Molekül eingesetzt (siehe auch Kennedy/Ivan loc. cit S. 67).
So wird beispielsweise Bortrichlorid als Lewis-Säure bei der Polymerisation von Isobuten in der 10-fachen molaren Menge (loc. cit S. 62) und Titan(IV)chlorid sogar in mehr als 20-molarem Überschuss bezogen auf die Initiatorverbindung eingesetzt. Die Konzentrationen an Lewis-Säure sind daher sehr hoch. Unter diesen Bedingungen wurden regelmäßig Halogen-terminierte Polyisobutene hergestellt.

Die EP-A 279 456 beschreibt die Herstellung von Halogen- oder Acyloxy-terminierten Polyisobutenen durch Umsetzung von Isobuten in Gegenwart von Lewis-Säuren, Alkylhalogeniden oder Alkylestern von Carbonsäuren als Initiatoren und Organonitro-Verbindungen als Cosolventien. Die Verwendung von Organonitroverbindungen ist jedoch kostspielig.

Die ältere deutsche Patentanmeldung P 199 37 562.3 beschreibt die Herstellung von Blockcopolymeren durch sogenannte lebende kationische Polymerisation. Als Initiatoren werden Lewis-Säuren und Alkylhalogenide eingesetzt.

EP 0 652 233 offenbart ein Verfahren zur Polymerisation von Isobuten mit SnCl₄ und TiCl₄ als Lewis -Säuren in Gegenwart von tertiär -Butylchlorid als Coinitiator. Es wird unter anderem der Einsatz eines Unterschusses an Lewis -Säure gegenüber tertiär-Butylchlorid beschrieben.

EP 0 556 965 offenbart ebenfalls ein Verfahren zur Polymerisation von Isobuten, allerdings mit EtAlCl₂ als Lewis -Säure und ebenfalls in Gegenwart von tertiär -Butylchlorid als Coinitiator. In einigen Beispielen wird ein Unterschuss an Lewis -Säure eingesetzt.

Der vorliegenden Erfindung liegt die Aufgabe zugrunde, ein Verfahren zur Herstellung von Polyisobutenen mit einem hohen Gehalt an olefinisch ungesättigten Endgruppen und einer engen Molekular-gewichtsverteilung bereitzustellen, das sich in einfacher Weise durchführen lässt.

Diese Aufgabe wird überraschenderweise durch ein Verfahren zur kationischen Polymerisation von Isobuten oder isobutenhaltigen Monomermischungen gelöst, bei dem man die Polymerisation in Gegenwart eines Initiatorsystems durchführt, das ein kovalentes Metall- oder Halbmetallchlorid als Lewis-Säure und wenigstens eine organische Verbindung I mit wenigstens einer funktionellen Gruppe FG, die unter Polymerisationsbedingungen mit der Lewis-Säure ein Carbokation oder ein Ionenpaar bildet, in einem gegenüber der Lewis-Säure inerten Lösungsmittel umfasst.

Die vorliegende Erfindung betrifft somit ein Verfahren zur Herstellung von Polyisobutenen, worin wenigstens 60 mol-% der Polymerketten wenigstens eine olefinisch ungesättigte Endgruppe aufweisen, durch kationische Polymerisation von Isobuten oder isobutenhaltigen Monomermischungen in kondensierter Phase, das dadurch gekennzeichnet ist, dass man die Polymerisation in Gegenwart eines Initiatorsystems, umfassend
i) eine Lewis-Säure, ausgewählt unter Titan (IV) Chlorid und Bortrichlorid, und
ii) wenigstens eine organische Verbindung I mit wenigstens einer funktionellen Gruppe FG, die unter Polymerisationsbedingungen mit der Lewis-Säure ein Carbokation oder einen kationogenen Komplex bildet, wobei FG ausgewählt ist unter Acyloxy-, Alkoxy- oder Halogen, die an ein sekundäres oder tertiäres, an ein allylisches oder ein benzylisches C-Atom gebunden sind,

in einem gegenüber der Lewis-Säure inerten Lösungsmittel durchgeführt, wobei die Lewis-Säure in molarem Unterschuss, bezogen auf die funktionellen Gruppen FG, eingesetzt wird.

Unter Polyisobutenen versteht man im Sinne der vorliegenden Erfindung sowohl die Homopolymere des Isobutens als auch Copolymere, die zu einem überwiegenden Anteil, vorzugsweise zu mehr als 80 Gew.-%, insbesondere mehr als 90 Gew.-% und besonders bevorzugt mehr als 95 Gew.-% aus einpolymerisierten Isobuteneinheiten aufgebaut sind. Entsprechend setzt man erfindungsgemäß entweder reines Isobuten oder Monomermischungen ein, die wenigstens 80 Gew.-%, insbesondere wenigstens 90 Gew.-% und besonders bevorzugt wenigstens 95 Gew.-% Isobuten, und weniger als 20 Gew.-%, vorzugsweise weniger als 10 Gew.-% und insbesondere weniger als 5 Gew.-% mit Isobuten unter den Bedingungen einer kationischen Polymerisation copolymerisierbare Monomere enthalten.

Als copolymerisierbare Monomere kommen Vinylaromaten wie Styrol und α-Methylstyrol, C₁-C₄-Alkylstyrole wie 2-, 3- und 4-Methylstyrol, sowie 4-tert.-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(meth-oxyethoxy)silyl]-2-methylpropen-2.

Im Hinblick auf die angestrebte Verwendung der nach dem erfindungsgemäßen Verfahren erhaltenen Polyisobutene als Kraft- oder Schmierstoffadditive setzt man das Isobuten vorzugsweise in Abwesenheit der vorgenannten Comonomere ein.

Als Isobuten-Einsatzstoffe für das erfindungsgemäße Verfahren eignet sich insbesondere Isobuten. Ausserdem kann man isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalysed Cracking), sofern sie weitgehend von darin enthaltenem 1,3-Butadien befreit sind, einsetzen. Erfindungsgemäß geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial übernehmen die von Isobuten verschiedenen Kohlenwasserstoffe die Rolle eines inerten Lösungsmittels.

Im erfindungsgemäßen Verfahren wird die Polymerisation des Isobutens durch das Initiatorsystem, umfassend Titantetrachlorid als Lewis-Säure und wenigstens eine organische Verbindung I, ausgelöst. Man nimmt an, dass die Lewis-Säure mit der Verbindung I ein Carbokation oder zumindest einen ionogenen Komplex bildet, der mit der olefinisch ungesättigten Doppelbindung des Isobutens wechselwirkt und dabei eine positive (Partial-)Ladung auf dem tertiären Kohlenstoffatom des Isobutens erzeugt. Diese wiederum wechselwirkt mit einem weiteren Isobutenmolekül unter Fortsetzung der Polymerisationsreaktion. Als Verbindungen I kommen daher alle jene Verbindungen in Betracht, die bekanntermaßen mit Lewis-Säuren ein Carbokation oder zumindest einen ionogenen Komplex bilden.

Die Begriffe "Carbokation" und "kationogener Komplex" sind nicht streng voneinander getrennt, sondern umfassen alle Zwischenstufen von solvens-getrennten Ionen, solvens-getrennten Ionenpaaren, Kontaktionenpaaren und stark polarisierten Komplexen mit positiver Partialladung an einem C-Atom der Verbindung I. Man nimmt an, dass sich unter den Reaktionsbedingungen, insbesondere bei Verwendung unpolarer Lösungsmittel als Reaktionsmedium, (Kontakt)ionenpaare beispielsweise der Formel

R^{⊕}[X-Ti₂Cl₈]^{⊖}

bilden, wobei R^{⊕} für das Carbokation, also den organischen Rest, welcher die positive Ladung trägt, steht.

Als Lewis-Säuren kommen beispielsweise die (Halb)metallchloride BCl₃, TiCl₄, VCl₅, SnCl₄, FeCl₃ in Betracht. Bevorzugte (Halb)metallchloride sind BCl₃ und insbesondere TiCl₄.

Als Verbindungen der Formel I sind grundsätzlich alle organischen Verbindungen geeignet, die wenigstens eine nucleophil verdrängbare Abgangsgruppe X aufweisen und die eine positive Ladung oder Partial-Ladung an dem C-Atom, welches die Abgangsgruppe X trägt, stabilisieren können. Hierzu zählen bekanntermaßen Verbindungen, die wenigstens eine Abgangsgruppe X aufweisen, die an ein sekundäres oder tertiäres aliphatisches Kohlenstoffatom oder an ein allylisches oder benzylisches Kohlenstoffatom gebunden ist. Als Abgangsgruppen kommen dabei erfindungsgemäß Halogen, C₁-C₆-Alkoxy und C₁-C₆-Alkylcarbonyloxy in Betracht.

Halogen steht hier insbesondere für Chlor, Brom oder Jod und speziell für Chlor. C₁-C₆-Alkoxy kann sowohl linear als auch verzweigt sein, und steht beispielsweise für Methoxy, Ethoxy, n-Propoxy, Isopropoxy, n-Butoxy, Isobutoxy, n-Pentoxy und n-Hexoxy, insbesondere Methoxy. C₁-C₆-Alkylcarbonyloxy steht beispielsweise für Acetoxy, Propionyloxy, n-Butyroxy und Isobutyroxy, insbesondere Acetoxy.

Erfindungsgemäß werden solche Verbindungen der allgemeinen Formel I verwendet, worin die funktionelle Gruppe die allgemeine Formel FG 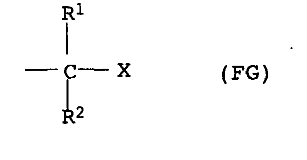 aufweist, worin
- X: ausgewählt ist unter Halogen, C₁-C₆-Alkoxy und C₁-C₆-Acyloxy,
- R¹: Wasserstoff oder Methyl bedeutet und
- R²: für Methyl steht, oder mit R¹ oder dem Molekülteil an den die funktionelle Gruppe FG gebunden ist, einen C₅-C₆-Cycloalkyl-ring bildet, R² auch Wasserstoff bedeuten kann, wenn die funktionelle Gruppe FG an ein aromatisches oder olefinisch ungesättigtes C-Atom gebunden ist.

Die Verbindungen der allgemeinen Formel I weisen vorzugsweise eine, zwei, drei oder vier, insbesondere eine oder zwei, und besonders bevorzugt eine funktionelle Gruppe FG auf. Bevorzugt steht X in Formel (FG) für ein Halogenatom, insbesondere für Chlor.

Die Verbindungen I gehorchen den allgemeinen Formeln I-A bis I-D: 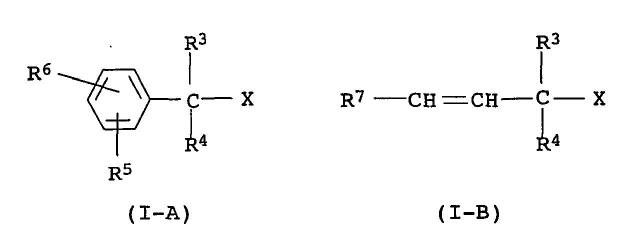 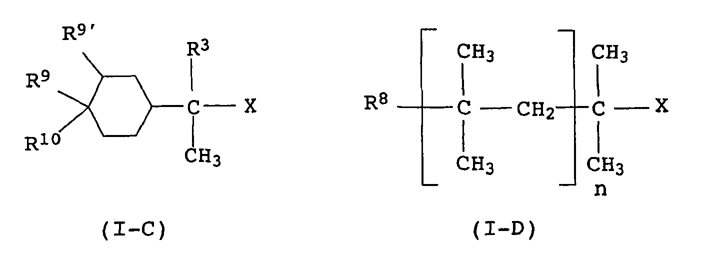
worin X die zuvor genannte Bedeutung hat,
- n: für 0, 1, 2, 3, 4 oder 5 steht,
- R³, R⁴ und R¹⁰: unabhängig voneinander für Wasserstoff oder Methyl stehen,
- R⁵, R⁶ und R⁷: unabhängig voneinander für Wasserstoff, C₁-C₄-Al-kyl oder eine Gruppe CR³R⁴-X, stehen, worin R³, R⁴ und X die zuvor genannten Bedeutungen haben und
- R⁸: für Wasserstoff, Methyl oder ein Gruppe X steht und
- R⁹ und R^{9'}: Wasserstoff oder eine Gruppe X bedeuten.

In den Formeln I-A bis I-D stehen R³ und R⁴ vorzugsweise beide für Methyl. In der Formel I-A steht R⁶ beispielsweise für eine Gruppe CR³R⁴-X, die in para-Position zur CR³R⁴X-Gruppe angeordnet ist, wenn R⁵ Wasserstoff bedeutet. Sie kann sich auch in der meta-Position befinden, wenn die Gruppe R⁵ für C₁-C₄-Alkyl oder eine Gruppe CR³R⁴-X steht. Bevorzugte Verbindungen I-A sind z. B.: 2-Chlor-2-phenylpropan sowie 1,4-bis-(2-Chlorpropyl-2)benzol.

In Formel I-B steht R⁷ vorzugsweise für eine Gruppe CR³R⁴-X oder für Wasserstoff. Beispiele für Verbindungen der Formel I-B sind Allylchlorid, Methallylchlorid, 2-Chlor-2-methylbuten-2 sowie 2,5-Dichlor-2,5-dimethylhexen-3.

In den Verbindungen I-C steht R³ vorzugsweise für Methyl. R² steht vorzugsweise ebenfalls für Methyl. R⁹ steht vorzugsweise für eine Gruppe X, und insbesondere für Halogen, insbesondere, wenn R¹⁰ für Methyl steht. Beispiele für Verbindungen der allgemeinen Formel I-C sind 1,8-Dichlor-4-p-menthan (Limonendihydrochlorid), 1,8-Dibrom-4-p-menthan (Limonendihydrobromid), 1-(1-Chlorethyl-3-chlorcyclohexan, 1-(1-Chlorethyl-4-chlorcyclohexan, 1-(1-Bromethyl)-3-bromcyclohexan und 1-(1-Bromethyl)-4-bromcyclohexan.

Unter den Verbindungen der Formel I-D sind solche bevorzugt, in denen R⁸ für eine Methylgruppe steht. Bevorzugt sind außerdem Verbindungen der allgemeinen Formel I-D, in denen R⁸ für eine Gruppe X, und insbesondere ein Halogen-Atom, steht, wenn n > 0 ist.

Im Hinblick auf die Verwendung der nach dem erfindungsgemäßen Verfahren hergestellten Polyisobutene als Kraft- oder Schmierstoffadditive werden unter den Verbindungen I die Verbindungen der Formel I-D bevorzugt, und hierunter insbesondere solche, in denen X für ein Halogenatom steht. Vorzugsweise steht in der Formel I-D die Variable n für 1, 2, 3 oder 4, und insbesondere für 1 oder 2.

Die Verwendung der Verbindungen der allgemeinen Formel I-C als Hilfsmittel (Initiator) für die kationische Polymerisation ist neu und ebenfalls Gegenstand der vorliegenden Erfindung. Verbindungen I-C dienen dabei zusammen mit Lewis-Säuren, vorzugsweise den vorgenannten Metallchloriden, insbesondere TiCl₄ oder BCl₃ und gegebenenfalls Verbindungen II als Initiatoren. Sie sind insbesondere zur Homo- und Copolymerisation von Isobuten, gegebenenfalls mit geeigneten Comonomeren, sowie zur Blockcopolymerisation von Isobuten mit beispielsweise vinylaromatischen Monomeren, nach den Verfahren des Standes der Technik oder nach dem erfindungsgemäßen Verfahren geeignet.

Die Verbindungen I-C lassen sich in glatter Reaktion aus den Verbindungen der allgemeinen Formel III 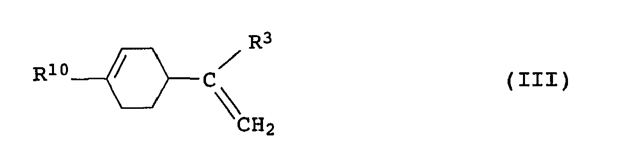
worin R³ und R¹⁰ die zuvor genannten Bedeutungen haben, durch Umsetzung mit Verbindungen H-X nach bekannten Verfahren herstellen. Eine Beschreibung ihrer Herstellung geben z.B. Carman et al. in Aust. J. Chem. 22, 1969, S. 2651-2656. X hat hier die vorgenannte Bedeutung. Insbesondere stellt man die Verbindungen der allgemeinen Formel I-B, worin X für ein Halogenatom steht, durch Umsetzung mit Halogenwasserstoff, vorzugsweise in wasserfreier Form, insbesondere durch Umsetzung mit gasförmiger HCl oder HBr her. Die Umsetzung mit Halogenwasserstoff erfolgt vorzugsweise in einem inerten organischen Lösungenmittel wie einem Kohlenwasserstoff, einem Halogenkohlenwasserstoff, einem Ether, einer organischen Carbonsäure wie Ameisen-, Essig- oder Propionsäure oder Mischungen dieser Lösungsmittel.

Verbindungen der allgemeinen Formel I-C, worin X für ein Halogenatom steht, können außerdem nach bekannten Verfahren mit C₁-C₆-Alkanolen oder C₁-C₆-Alkancarbonsäuren umgesetzt werden, wobei man Verbindungen I-C erhält, worin X für C₁-C₆-Alkyloxy oder C₁-C₆-Acyloxy steht. Die Verbindungen der allgemeinen Formel I-C können selbstverständlich nicht nur im erfindungsgemäßen Verfahren, sondern auch in anderen Verfahren des Standes der Technik zur kationischen Polymerisation von Olefinen zusammen mit Lewis-Säuren eingesetzt werden.

In der Regel wird man im erfindungsgemäßen Verfahren die Verbindung I in einer Menge von wenigstens 10⁻⁶ mol pro mol Isobuten bzw. polymerisierbare Monomere einsetzen, um eine ausreichende Konzentration an Initiator-Komplexen zur Verfügung zu stellen. In der Regel wird die Menge der Verbindungen I einen Wert von 1 mol je mol zu polymerisierenden Monomeren (bzw. Isobuten) nicht überschreiten. Diese sowie die im Folgenden zu Mengen der Verbindung I gemachten Angaben sind, sofern nichts anderes angegeben ist, stets auf die Anzahl der funktionellen Gruppen (FG) in der Verbindung I bezogen. Vorzugsweise setzt man die Verbindungen der Formel I in einer Menge von 10⁻⁵ bis 10⁻¹ mol, insbesondere 10⁻⁴ bis 5 x 10⁻² mol, bezogen auf die funktionellen Gruppen (FG) der Verbindung I, je mol Isobuten, bzw. polymerisierbare Monomere, ein. Hierbei ist zu berücksichtigen, dass das erreichte Molekulargewicht des nach dem erfindungsgemäßen Verfahren hergestellten Polyisobutens von der Menge an Verbindung I dergestalt abhängt, dass mit zunehmender Konzentration an Verbindung I das Molekulargewicht des Polyisobutens abnimmt.

Die Lewis-Säure wird im erfindungsgemäßen Verfahren naturgemäß in einer Menge eingesetzt, die zur Bildung des Initiatorkomplexes ausreicht. Dies ist in der Regel bereits bei geringen Konzentrationen der Lewis-Säure im Reaktionsmedium, in der Regel wenigstens 0,01 mol/l, gewährleistet. In der Regel wird daher die Lewis-Säure im Reaktionsmedium eine Konzentration von 0,3 mol/l nicht überschreiten. Insbesondere liegt die Konzentration im Bereich von 0,02 bis 0,2 mol/l und besonders bevorzugt im Bereich von 0,03 bis 0,15 mol/l. Erfindungsgemäß liegt das Molverhältnis von lewis-saurem Metallhalogenid zu den funktionellen Gruppen FG der Verbindung I unterhalb 1:1, z.B. im Bereich von 0,01:1 bis < 1:1; insbesondere im Bereich von 0,02:1 bis 0,8:1. In der Regel wird Bortrichlorid in einem geringeren Molverhältnis von vorzugsweise 0,02 bis 0,1 mol je mol funktionelle Gruppen FG und Titan(IV)chlorid bei etwas grösseren Molverhältnissen, z.B. 0,1 bis < 1 mol je mol funktionelle Gruppe FG, und vorzugsweise 0,1 bis 0,8 mol je mol funktionelle Gruppe FG eingesetzt.

Vorzugsweise umfasst das Initiatorsystem zusätzlich zu den Verbindungen I wenigstens eine weitere aprotisch polare Verbindung II, die zur Komplexbildung mit der Lewis-Säure oder dem unter Reaktionsbedingungen gebildeten Carbokation oder ionogenen Komplex aus Lewis-Säure und Verbindung I geeignet ist. Hierbei handelt es sich um sogenannte Lewis-Basen (Elektronendonatoren), die wenigstens ein freies Elektronenpaar an einem Heteroatom, beispielsweise einem Sauerstoff-, Stickstoff-, Phosphor- oder Schwefelatom, aufweisen.

Beispiele für derartige Verbindungen sind Verbindungen mit Ethergruppen wie Di-C₁-C₁₀-Alkylether mit primären oder sekundären Alkylgruppen, z.B. Diethylether, Diisopropylether, cyclische Ether wie Tetrahydrofuran oder Dioxan, tertiäre Amine, z.B. Trialkylamine wie Triethylamin, tertiäre Amide wie Dimethylacetamid, N-Methylpyrrolidon, Ester aliphatischer oder aromatischer Carbonsäuren mit primären Alkoholen wie Ethylacetat und Ethylpropionat, Verbindungen mit Thioethergruppen, z.B. Dialkylthioether mit primären oder sekundären Alkylgruppen, Alkylarylthioether mit primären oder sekundären Alkylgruppen wie Methylphenylsulfid, Dialkylsulfoxide wie Dimethylsulfoxid, aliphatische und aromatische Nitrile wie Acetonitril, Propionitril und Benzonitril, tertiäre Phosphine wie Trimethylphosphin, Triphenylphosphin, Tricyclohexylphosphin. Bevorzugte Verbindungen II sind Pyridin sowie Pyridinderivate, insbesondere Alkylpyridine. Beispiele für Alkylpyridine sind neben den Picolinen auch Pyridine mit einem sterisch abgeschirmten Stickstoffatom wie 2,6-Di-tert.-butylpyridin. Letztere wirken als Protonenfallen und verhindern auf diese Weise, dass durch ubiquitäre Wasserspuren eine nicht erfindungsgemäße unkontrollierte Polymerisation in Gang gesetzt wird.

In der Regel wird man die Verbindung II in einer Menge einsetzen, dass das Molverhältnis von Verbindung II zu Verbindung I im Bereich von 10:1 bis 1:20, bezogen auf die funktionellen Gruppen (FG) der Verbindung I liegt.

In der Regel wird man das erfindungsgemäße Verfahren bei Temperaturen unterhalb 0°C, z.B. im Bereich von 0 bis -140°C, vorzugsweise im Bereich von -30 bis -120°C, und besonders bevorzugt im Bereich von -40 bis -110°C durchführen. Der Reaktionsdruck ist von untergeordneter Bedeutung und richtet sich in bekannter Weise nach den verwendeten Apparaturen und sonstigen Reaktionsbedingungen.

Als Lösungsmittel kommen grundsätzlich alle organischen Verbindungen in Betracht, die von den Verbindungen I und II sowie den polymerisierbaren Monomeren, insbesondere Isobuten, verschieden sind und die keine abstrahierbaren Protonen aufweisen. Bevorzugte Lösungsmittel sind Kohlenwasserstoffe und Halogenkohlenwasserstoffe. Besonders bevorzugte Lösungsmittel sind acyclische Alkane mit 2 bis 8 und vorzugsweise 3 bis 6 Kohlenstoffatomen wie Ethan, Iso- und n-Propan, n-Butan und seine Isomeren, n-Pentan und seine Isomeren, n-Hexan und seine Isomeren sowie n-Heptan und seine Isomeren, cyclische Alkane mit 5 bis 8 C-Atomen wie Cyclopentan, Cyclohexan, Cycloheptan, acyclische Alkene mit vorzugsweise 2 bis 8 Kohlenstoffatomen wie Ethen, Iso- und n-Propen, n-Buten, n-Penten, n-Hexen und n-Hepten, cyclische Olefine wie Cyclopenten, Cyclohexen und Cyclohepten, halogenierte Alkane mit 1 bis 5 Kohlenstoffatomen und 1, 2, 3, 4, 5 oder 6 Halogenatomen, ausgewählt unter Fluor, Chlor oder Brom, insbesondere Chlor, wie Methylchlorid, Methylbromid, Dichlormethan, Trichlormethan, Dibrommethan, Ethylchlorid, Ethylbromid, 1,2-Dichlorethan und 1,1,1-Trichlorethan, sowie Chloroform.

Geeignet sind nicht nur die Lösungsmittel als solche sondern auch Mischungen dieser Lösungsmittel. Mischungen sind insbesondere dann bevorzugt, wenn das Lösungsmittel einen Schmelzpunkt oberhalb der gewünschten Polymerisationstemperatur aufweist.

Ganz besonders bevorzugt sind Lösungsmittel und Lösungsmittelgemische, die wenigstens ein cyclisches oder alicyclisches Alkan und/oder ein α-Olefin umfassen. Hierunter besonders bevorzugt sind Lösungsmittelgemische, die wenigstens einen nicht halogenierten Kohlenwasserstoff und wenigstens einen halogenierten, vorzugsweise chlorierten, Kohlenwasserstoff, vorzugsweise ein aliphatisches oder cycloaliphatisches Alkan, und einen chlorierten Kohlenwasserstoff umfassen. Selbstverständlich umfassen die chlorierten Kohlenwasserstoffe dabei keine Verbindung, worin Chloratome an sekundären oder tertiären Kohlenstoffatomen sitzen.

Es versteht sich von selbst, dass man die Polymerisation unter weitgehend aprotischen, insbesondere unter wasserfreien, Reaktionsbedingungen durchführt. Unter aprotischen beziehungsweise wasserfreien Reaktionsbedingungen versteht man, dass der Wassergehalt (bzw. der Gehalt an protischen Verunreinigungen) im Reaktionsgemisch weniger als 50 ppm, und insbesondere weniger als 5 ppm beträgt. In der Regel wird man daher die Einsatzstoffe vor ihrer Verwendung physikalisch und/oder durch chemische Maßnahmen trocknen. Insbesondere hat es sich bewährt, die bevorzugt als Lösungsmittel eingesetzten aliphatischen oder cycloaliphatischen Kohlenwasserstoffe nach üblicher Vorreinigung und Vortrocknung mit einer metallorganischen Verbindung, beispielsweise einer Organolithium-, Organomagnesium- oder Organoaluminium-Verbindung zu versetzen, in einer Menge, die ausreicht, um die Wasserspuren aus dem Lösungsmittel zu entfernen. Das so behandelte Lösungsmittel wird dann direkt in das Reaktionsgefäß einkondensiert. In ähnlicher Weise kann man auch mit den zu polymerisierenden Monomeren, insbesondere dem Isobuten oder Mischungen aus Isobuten und Verbindung II verfahren.

Die Vorreinigung bzw. Vortrocknung der Lösungsmittel und des Isobutens erfolgt in üblicher Weise, vorzugsweise durch Behandlung mit festen Trocknungsmitteln wie Molekularsieben oder vorgetrockneten Oxiden wie Calciumoxid oder Bariumoxid. In analoger Weise kann man die Einsatzstoffe trocknen, für die eine Behandlung mit Metallalkylen nicht in Betracht kommt, beispielsweise die als Lösungsmittel verwendeten Alkylhalogenide, sowie die Verbindungen I.

Die Polymerisation des Isobutens bzw. des isobutenhaltigen Einsatzmaterials erfolgt spontan beim Vermischen des erfindungsgemäß zur Anwendung kommenden Initiatorsystems mit dem Isobuten bzw. dem isobutenhaltigen Einsatzmaterial in dem inerten organischen Lösungsmittel bei der gewünschten Reaktionstemperatur. Hierbei kann man so vorgehen, dass man Isobuten in dem inerten Lösungsmittel vorlegt, auf Reaktionstemperatur kühlt und anschließend das Initiatorsystem zugibt. Man kann auch so vorgehen, dass man das Initiatorsystem in dem Lösungsmittel vorlegt, und anschließend das Isobuten bzw. den isobutenhaltigen Einsatzstoff zugibt. Außerdem kann man einen Teil oder die Gesamtmenge des Isobutens bzw. des isobutenhaltigen Einsatzstoffes in dem Lösungsmittel vorlegen und dann das Initiatorsystem zugeben. Die Restmengen an Isobuten bzw. isobutenhaltigem Einsatzstoff werden dann im Verlaufe der Reaktion, beispielsweise nach Maßgabe ihres Verbrauchs, zugeführt. Bei der Zugabe des Initiatorsystems wird man in der Regel so vorgehen, dass man die Komponenten des Initiatorsystems getrennt zugibt. Bei der hier beschriebenen diskontinuierlichen Fahrweise wird man in der Regel so vorgehen, dass man zuerst die Verbindung I und gegebenenfalls die Verbindung II und anschließend die Lewis-Säure zugibt. Der Zeitpunkt der Initiatorzugabe gilt dann als der Zeitpunkt, an dem beide Komponenten des Initiatorsystems im Reaktionsgefäss enthalten sind. Beispielsweise kann man so vorgehen, dass man zunächst das Lösungsmittel, dann die Verbindung I und gegebenenfalls die Lewis-Base II, und dann einen Teil oder die Gesamtmenge des Isobutens bzw. des isobutenhaltigen Einsatzstoffes vorlegt, die Polymerisation durch Zugabe der Lewis-Säure startet, und anschließend gegebenenfalls noch vorhandene Restmengen an Isobuten bzw. isobutenhaltigem Einsatzstoff der Polymerisation zuführt. Es ist aber auch möglich, zunächst das Lösungsmittel, dann die Lewis-Säure und einen Teil oder die Gesamtmenge des Isobutens oder des isobutenhaltigen Einsatzstoffs vorzulegen und dann die Polymerisation durch Zugabe der Verbindung I und gegebenenfalls der Verbindung II zu starten.

Neben der hier beschriebenen diskontinuierlichen Vorgehensweise kann man die Polymerisation auch als kontinuierliches Verfahren ausgestalten. Hierbei führt man die Einsatzstoffe, d.h. die zu polymerisierenden Monomere, das Lösungsmittel sowie das Initiatorsystem der Polymerisationsreaktion kontinuierlich zu und entnimmt kontinuierlich Reaktionsprodukt, so dass sich im Reaktor mehr oder weniger stationäre Polymerisationsbedingungen einstellen. Die Komponenten des Initiatorsystems können dabei sowohl getrennt als auch gemeinsam, vorzugsweise verdünnt im Lösungsmittel zugeführt werden. Das zu polymerisierende Isobuten bzw. die isobutenhaltigen Monomergemische können als solche, verdünnt mit einem Lösungsmittel oder als isobutenhaltiger Kohlenwasserstoffstrom zugeführt werden.

Die Abführung der Reaktionswärme bei der diskontinuierlichen wie auch bei der kontinuierlichen Reaktionsführung erfolgt in üblicher Weise, beispielsweise durch intern eingebaute Wärmetauscher und/oder durch Wandkühlung und/oder unter Ausnutzung einer Siedekühlung. Hier hat sich insbesondere die Verwendung von Ethen und/oder Mischungen von Ethen mit anderen Kohlenwasserstoffen und/oder Halogenkohlenwasserstoffen als Lösungsmittel bewährt, da Ethen nicht nur preiswert ist, sondern auch einen Siedepunkt im gewünschten Polymerisationstemperaturbereich aufweist.

Als Reaktionsgefäße für die Durchführung des erfindungsgemäßen Verfahrens kommen grundsätzlich alle Reaktoren in Betracht, wie sie üblicherweise bei einer kationischen Polymerisation von Isobuten, z.B. einer kationischen Polymerisation von Isobuten mit Bortrifluorid-Sauerstoff-Komplexen, eingesetzt werden. Insoweit wird hier auf den einschlägigen Stand der Technik verwiesen. Bei diskontinuierlicher Reaktionsführung kommen die hierfür üblichen Rührkessel in Betracht, die vorzugsweise mit einer Siedekühlung, geeigneten Mischern, Zuläufen, Wärmetauscherelementen und Inertisierungsvorrichtungen ausgerüstet sind. Die kontinuierliche Reaktionsführung kann in den hierfür üblichen Reaktionskesseln, Reaktionskaskaden, Rohrreaktoren, Rohrbündelreaktoren, insbesondere kreisförmig geführten Rohr- und Rohrbündelreaktoren, durchgeführt werden, die vorzugsweise in der oben für Rührkessel beschriebenen Weise ausgerüstet sind.

Zur Gewinnung der Isobutene aus dem Reaktionsgemisch wird dieses im Anschluß an die Polymerisation in der für kationische Polymerisationsreaktionen üblichen Weise deaktiviert, vorzugsweise durch Zugabe einer protischen Verbindung, insbesondere durch Zugabe von Alkoholen wie Methanol, Ethanol, n-Propanol, Isopropanol, n-Butanol, Isobutanol, sec.-Butanol oder tert.-Butanol, oder deren Mischungen mit Wasser. Vorzugsweise werden die zur Deaktivierung verwendeten Substanzen in einem Verdünnungsmittel, beispielsweise einem der sogenannten Lösungsmittel, eingesetzt, um eine unerwünschte Viskositätssteigerung zu vermeiden. Im Übrigen sei auch hier auf den eingangs zitierten Stand der Technik zur Polymerisation von Bortrifluorid mit Isobuten verwiesen, dessen Maßnahmen zur Aufarbeitung in analoger Weise auf das erfindungsgemäße Verfahren übertragen werden können. Vorzugsweise wird das zur Deaktivierung verwendete Mittel oder dessen Mischung mit einem inerten Lösungsmittel vor der Deaktivierung auf Polymerisationstemperatur abgekühlt, um unerwünschte Nebenreaktionen zu vermeiden.

Anschließend werden in der Regel die Lösungsmittel in geeigneten Aggregaten, beispielsweise in Rotations-, Fallfilm- oder Dünnschichtverdampfern oder durch Flash-Verdampfung (Entspannung der Reaktionslösung hinter einem Wärmetauscher in Rohrleitungen oder durch eine Loch/Düsenplatte) entfernt. In der Regel wird man zur Entfernung des Lösungsmittels Unterdruck, z.B. im Bereich von 0,1 bis 800 mbar, bevorzugt 1 bis 100 mbar, anlegen. Die Sumpftemperatur beträgt vorzugsweise 50°C bis 250°C und insbesondere 150°C bis 230°C. Die Anwendung erhöhter Temperaturen, z.B. oberhalb 150°C, insbesondere 170°C oder höher, führt zu einer weiteren Verringerung von Restchlorgehalten und somit zu einem erhöhten Anteil an terminalen Doppelbindungen im Reaktionsprodukt.

Nach dem erfindungsgemäßen Verfahren lassen sich Polyisobutene mit einem hohen Gehalt an olefinisch ungesättigten Endgruppen der allgemeinen Formel I herstellen. Der Endgruppengehalt liegt vorzugsweise bei wenigstens 80 mol-%, insbesondere wenigstens 90 mol-%, und besonders bevorzugt wenigstens 95 mol-%, bezogen auf die Polymerketten. Da die zur Initiierung der Polymerisation verwendeten Verbindungen I ebenfalls einen Terminus der Polymerkette bilden, kann dieser ebenfalls eine olefinisch ungesättigte Endgruppe aufweisen, z.B. bei Verwendungen von Verbindungen I-C, wie Allylchlorid oder Methallylchlorid. Die hier angegebenen Prozentzahlen an Doppelbindungen beziehen sich daher auf die Doppelbindungen am anderen Terminus der Polymerkette, und beziehen nicht die durch Verwendung der Verbindung I eingeführten Doppelbindungen ein.

Das Molekulargewicht der nach dem erfindungsgemäßen Verfahren erhältlichen Polymere liegt in der Regel im Bereich von 400 bis 400000 Dalton (zahlenmittleres Molekulargewicht Mₙ), vorzugsweise im Bereich von 500 bis 200000 Dalton, und besonders bevorzugt im Bereich von 700 bis 100000 Dalton. Die nach dem erfindungsgemäßen Verfahren erhältlichen Polyisobutene weisen überdies eine enge Molekulargewichtsverteilung auf, die durch eine Dispersität D = M_{w}/Mₙ unterhalb 3, vorzugsweise unterhalb 1,8, und insbesondere unterhalb 1,6, z.B. im Bereich von 1,05 bis 1,6 charakterisiert ist. M_{w} steht hierbei für das gewichtsmittlere Molekulargewicht.

Alle Angaben zu Molekulargewichten beziehen sich auf Werte, wie sie mittels Gelpermeationschromatographie (GPC) ermittelt wurden. Die Gelpermeationschromatographie erfolgte mit THF als Fließmittel und CS₂ als Referenz an zwei hintereinander geschalteten Säulen (L 300 mm, d 7,8 mm), wobei die erste Säule mit Styragel HR5 (Molekulargewichtsbereich 50000 bis 4 x 10⁶) und die zweite Säule mit Styragel HR3 (Molekulargewichtsbereich 200 bis 30000) der Fa. Waters gepackt waren. Die Detektion erfolgte über ein Differentialrefraktometer. Als Standards zur Bestimmung des Isobutenblocks wurden käufliche Polyisobutenstandards im Molmassenbereich 224 bis 1000000 der Fa. Polymer-Standards Service, Mainz, eingesetzt.

Die folgenden Beispiele sollen die Erfindungen verdeutlichen, ohne sie jedoch einzuschränken.

### I. Analytik

Die Bestimmung des Molekulargewichts (Mₙ, M_{w} und D) erfolgte in der oben beschriebenen Weise mittels GPC und/oder mittels ¹H-NMR-Spektroskopie. Der Doppelbindungsanteil wurde mittels ¹H-NMR-Spektroskopie (Integration der Vinylprotonen gegen Methyl- und Methylenprotonen) oder über den Chlorgehalt ermittelt. Der Restchlorgehalt wurde elementaranalytisch bestimmt.

### II. Polymerisationsverfahren

### Beispiel 1

Ein 1 1-Vierhalskolben, der mit Tropftrichter (auf dem ein Trokkeneiskühler sitzt), Thermometer, Septum, Magnetrührer und einem weiteren Tropftrichter ausgerüstet ist, wurde durch zweimaliges Evakuieren und Spülen mit trockenem Stickstoff getrocknet. Man kühlte mit einem Trockeneis/Aceton Kühlbad, gab 200 ml auf -78°C gekühltes Hexan zu. Dann gab man durch das Septum 1,7 g (9 mMol) Titantetrachlorid zu. Methylchlorid wurde über Molsieb 3Å getrocknet, in den Tropftrichter kondensiert (200 ml) und der Vorlage zugeführt. Dann gab man über das Septum 10,16 g (44 mMol) 2-Chlor-2-phenylpropan danach innerhalb 15 min 110 ml Isobuten, das über Molsieb 3Å getrocknet war und auf -78°C gekühlt wurde, in das Reaktionsgefäß. Durch Kühlung hielt man eine Innentemperatur im Reaktionsgefäss von -50°C ein und rührte man bei dieser Temperatur 20 min nach. Man erwärmte auf Raumtemperatur und setzte 200 ml Hexan zu. Dann wurden 20 ml Isopropanol zugegeben und das Gemisch dreimal mit Wasser gewaschen, über Natriumsulfat getrocknet und bis zum Enddruck von 2 mbar und der Endtemperatur von 220°C am Rotationsverdampfer Lösungsmittel abgezogen:

69,6 g klares Öl, Mₙ = 1253 D, D = 1,7; Chlorgehalt 0,12 g/kg (theoretisch für Chlorterminierung: 27,9 g/kg). Doppelbindungsanteil: > 99 mol-%.

### Beispiel 2

Bei einem Wiederholungsversuch wurden 120 ml Isobuten eingesetzt. (Es wurden nach 5, 10 und 15 min Proben gezogen und aufgearbeitet (insgesamt 16 g)).
Nach analogem Aufarbeiten des Ansatzes erhielt man 72 g klares Öl, Mₙ = 1484 D, D = 2,41; Chlorgehalt 0,22 g/kg (theoretisch für Chlorterminierung: 23,9 g/kg); Doppelbindungsanteil: > 99 mol-%.

### Beispiel 3

Als Reaktionsapparatür diente ein 1 1-Vierhalskolben, der mit Trockeneiskühler, Thermometer, Septum, Magnetrührer und einem weiteren Tropftrichter ausgerüstet war, und der eine direkte Verbindung zu einem 1 1-Kondensationskolben aufweist, der seinerseits mit einem graduierten Tropftrichter mit Trockeneiskühler versehen war. Die Apparatur wurde durch zweimaliges Evakuieren und Spülen mit trockenem Stickstoff getrocknet.

In den Kondensationskolben wurden gegeben (Kühlung im Aceton/Trockeneisbad): 300 ml n-Hexan (mit Molekularsieb 3Å bei -78°C getrocknet) und 100 ml Isobuten (bei -78°C kondensiert und über Aluminiumoxid vorgereinigt). Man setzt wenig Phenanthrolin zu und titriert mit n-Butyllithiumlösung bis zum Farbumschlag nach rotbraun. Die verbrauchte Menge an n-Butyllithiumlösung wurde nochmals zugesetzt. Dann gab man 144 g vorkondensiertes Methylchlorid zu. Das Trockeneisbad wurde durch ein Wasserbad ersetzt. Man destillierte den Inhalt des Kondensationskolbens in den Reaktionskolben (Trockeneiskühlung im Bad und im Kühler) über.

Bei einer Temperatur von -50°C wurden nacheinander 0,19 g 2,6-Di-tert.-butylpyridin, 0,5 g 2-Chlor-2-phenylpropan und schliesslich 0,51 g Titantetrachlorid über das Septum zugegeben. Durch Kühlung wurde die Innentemperatur auf -50°C gehalten. Dann rührte man 240 min bei -50°C nach. Man gab 20 ml Isopropanol (vorgekühlt auf -50°C) zu und wusch das Gemisch dreimal mit Wasser. Dann wurde über Natriumsulfat getrocknet und bis zum Enddruck von 2 mbar und der Endtemperatur von 220°C am Rotationsverdampfer Lösungsmittel abgezogen. 43 g leicht trübes Öl, Mₙ = 15595 D, D = 1,43; ¹H-NMR: Vinylprotonen bei δ = 5,2 ppm (endo-Doppelbindung) und δ = 4,8 und 4,65 ppm (exo-Doppelbindung). Aus dem Verhältnis Vinyl- zu Methyl- und Methylenprotonen errechnete sich ein Molekulargewicht von 16300 D. Chlorgehalt 0,1 g/kg (theoretisch für Chlorterminierung: 2,2 g/kg); Doppelbindungsanteil > 95 mol-%.

### Beispiel 4

Analog Beispiel 3 wurden zunächst umgesetzt: 480 ml Hexan, 400 g Methylchlorid, 9,84 g Titantetrachlorid, 0,56 g 1,8-Dichlor-4-p-menthan ("Limonendihydrochlorid"), 0,3 g 2,6-Di-tert.-butylpyridin und 0,4 g Pyridin. Man arbeitete nicht auf, sondern gab nach 4 h bei -50°C 58,4 g Styrol zu. Nach 1 h bei -50°C wurden 20 ml Isopropanol zugegeben und auf Raumtemperatur erwärmt. Nach Waschen mit Wasser, Trocknen und Einengen am Rotationsverdampfer bei 220°C/2 mbar erhielt man:
87,4 g farblose, opale, gummiartige Masse, Mₙ = 40670 D, D = 1,84.

Beispiel 4 belegt, dass Limonendihydrochlorid als Coinitiator nicht nur zur Herstellung olefin-terminierter Polyisobutene, sondern auch zur Herstellung von Blockcopolymeren im Sinne einer lebenden kationischen Polymerisation geeignet ist (vgl. die ältere deutsche Patentanmeldung 199 37 562.3).

### Beispiele 5 bis 22

Analog Beispiel 3 erfolgte die Durchführung der Beispiele 5 bis 22. Die Einsatzstoffe und Verfahrensparameter sind in Tabelle 1 und die Eigenschaften der erhaltenen Polymere in Tabelle 2 angegeben.

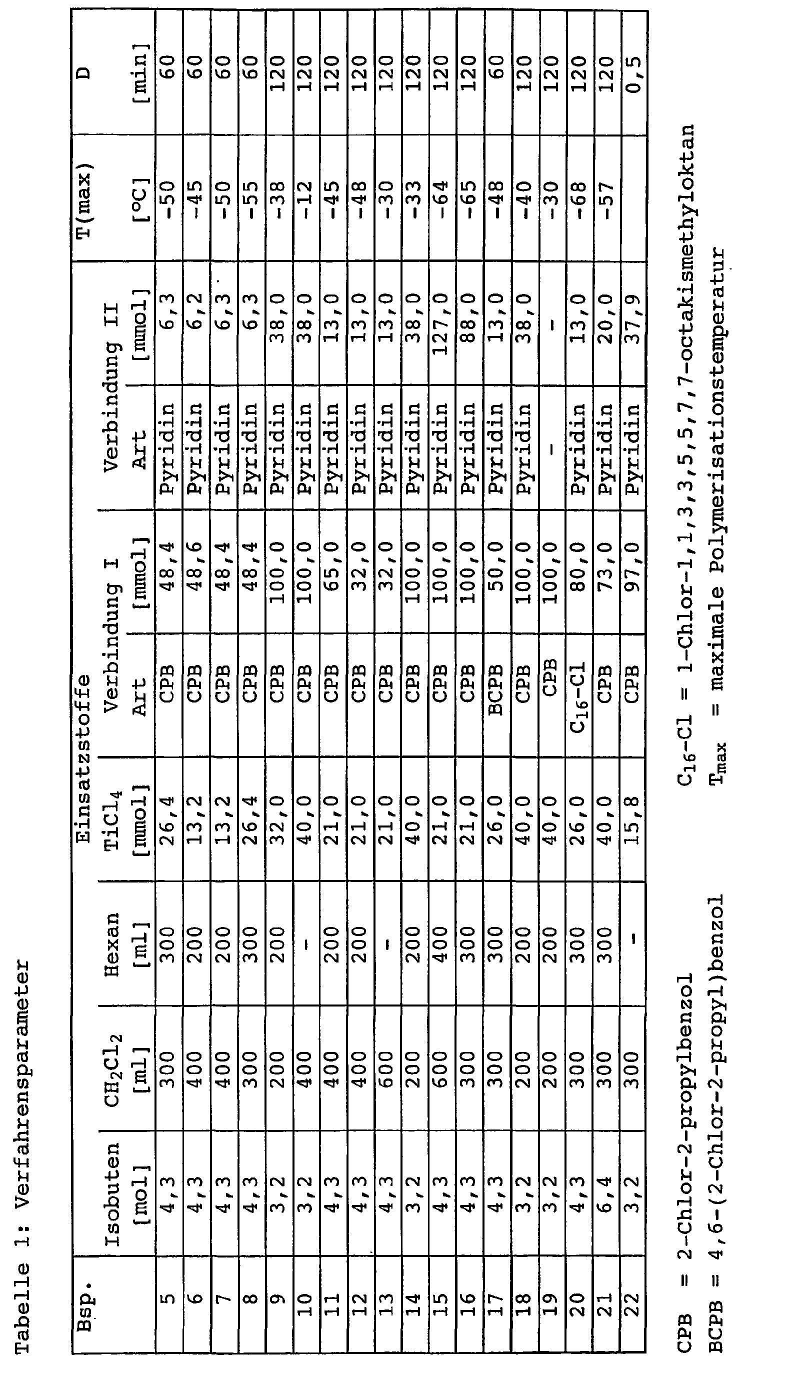

**Tabelle 2:**

| Bsp. | Ausbeute | GPC¹) | |
|---|---|---|---|
| | [g] | Mₙ | D |
| 5 | 183,0 | 3473 | 1,49 |
| 6 | 159,0 | 3295 | 2,54 |
| 7 | 232,0 | 3343 | 2,54 |
| 8 | 195,0 | 4067 | 1,50 |
| 9 | 171,5 | 1852 | 1,56 |
| 10 | 157,4 | 2243 | 1,76 |
| 11 | 223,8 | 3733 | 1,80 |
| 12 | 214,6 | 7787 | 1,28 |
| 13 | 171,9 | 7141 | 1,53 |
| 14 | 161,3 | 1937 | 1,57 |
| 15 | 22,8 | 1234 | 2,25 |
| 16 | 14,6 | 811 | 2,31 |
| 17 | 234,1 | 4463 | 1,34 |
| 18 | 164,5 | 1929 | 1,97 |
| 19 | 173,7 | 1981 | 2,97 |
| 20 | 248,7 | 3612 | 1,83 |
| 21 | 276,6 | 4565 | 2,18 |
| 22 | 119,0 | 1225 | 1,64 |

| | | | |
|---|---|---|---|
| 1) GPC = Gelpermeationschromatographie | | | |

Die Polymere der Beispiele 5 bis 22 hatten einen Chlorgehalt unterhalb 0,1 Gew.-%. Der Anteil terminaler Doppelbindungen lag bei allen Polymeren oberhalb 90 Mol-%

## Patentansprüche

1. Verfahren zur Herstellung von Polyisobutenen, worin wenigstens 60 mol-% der Polymerketten wenigstens eine olefinisch ungesättigte Endgruppe aufweisen, durch kationische Polymerisation von Isobuten oder isobutenhaltigen Monomermischungen in kondensierter Phase, **dadurch gekennzeichnet, dass** man die Polymerisation in Gegenwart eines initiatorsystems, umfassend
i) eine Lewis-Säure, ausgewählt unter Titan(IV)chlorid und Bortrichlorid, und
ii) wenigstens eine organische Verbindung I mit wenigstens einer funktionellen Gruppe FG, 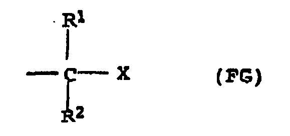
worin
X ausgewählt ist unter Halogen, C₁-C₆-Alkoxy und C₁-C₆-Acyloxy,
R¹ Wasserstoff oder Methyl bedeutet und
R² für Methyl steht, oder mit R¹ oder dem Molekülteil an den die funktionelle Gruppe FG gebunden ist, einen C₅-C₆-Cycloalkylring bildet, R² auch Wasserstoff bedeuten kann, wenn die funktionelle Gruppe FG an ein aromatisches oder olefinisch ungesättigtes C-Atom gebunden ist,
die unter Polymerisationsbedingungen ein Carbokation oder einen kationogenen Komplex bildet, wobei die organische Verbindung I ausgewählt ist unter Verbindungen der allgemeinen Formeln I-A bis I-D: 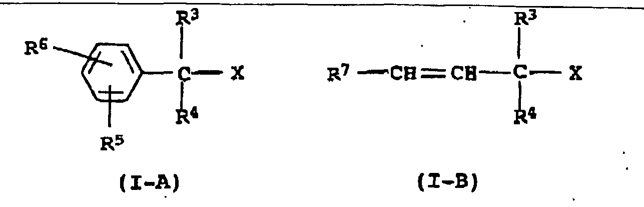 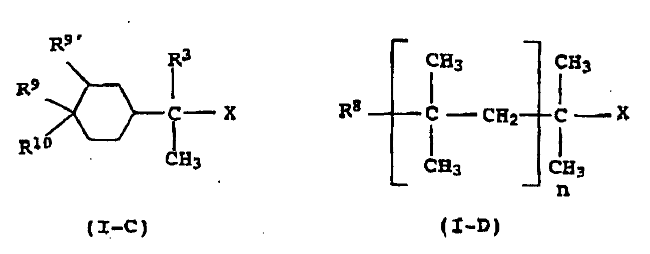
worin X die zuvor genannte Bedeutung hat,
n für 1, 2, 3, 4 oder 5 steht,
R³, R⁴ und R¹⁰ unabhängig voneinander für Wasserstoff oder Methyl stehen,
R⁵, R⁶ und R⁷ unabhängig voneinander für Wasserstoff, C₁-C₄-Alkyl oder eine Gruppe CR³R⁴-X, stehen, worin R³, R⁴ und X die zuvor genannten Bedeutungen haben und
R⁸ für Wasserstoff, Methyl oder ein Gruppe X steht und
R⁹ und R⁹' Wasserstoff oder ein Gruppe X bedeutet,
in einem gegenüber der Lewis-Säure inerten Lösungsmittel durchführt, wobei die Lewis-Säure in molarem Unterschuss, bezogen auf die funktionellen Gruppen FG der Verbindung I eingesetzt wird.

2. Verfahren nach Anspruch 1, **dadurch gekennzeichnet, dass** man die Verbindung I in einer Menge von 10⁻⁵ bis 10⁻¹ mol, bezogen auf die funktionellen Gruppen FG der Verbindung I, je mol Isobuten einsetzt.

3. Verfahren nach einem der vorhergehenden Ansprüche, **dadurch gekennzeichnet, dass** die Konzentration der Lewis-Säure im Reaktionsansatz im Bereich von 0,01 bis 0,3 mol/l liegt.

4. Verfahren nach einem der vorhergehenden Ansprüche, **dadurch gekennzeichnet, dass** das Initiatorsystem zusätzlich wenigstens eine aprotisch polare Verbindung II aufweist, die zur Komplexbildung mit der Lewis-Säure oder dem unter Reaktions-bedingungen gebildeten Carbokation oder kationogenen Komplex aus Lewis-Säure und Verbindung I geeignet ist.

5. Verfahren nach Anspruch 4, **dadurch gekennzeichnet, dass** die Verbindung II ausgewählt ist unter Pyridin und Alkylpyridinen.

6. Verfahren nach einem der Ansprüche 4 oder 5, **dadurch gekennzeichnet, dass** man die Verbindung II und die Verbindung I in einem Molverhältnis im Bereich von 10:1 bis 1:20, bezogen auf die funktionellen Gruppen FG der Verbindung I, einsetzt.

7. Verfahren nach einem der vorhergehenden Ansprüche, **dadurch gekennzeichnet, dass** man die Polymerisation bei Temperaturen unterhalb 0°C durchführt.

8. Verfahren nach Anspruch 7, **dadurch gekennzeichnet, dass** man die Polymerisation bei einer Temperatur im Bereich von -30 bis -120°C durchführt.

9. Verfahren nach Anspruch 8, **dadurch gekennzeichnet, dass** man die Polymerisation bei einer Temperatur im Bereich von -40 bis -110°C durchführt.

10. Verfahren nach einem der vorhergehenden Ansprüche, **dadurch gekennzeichnet, dass** das Lösungsmittel ausgewählt ist unter aliphatischen und cycloaliphatischen Kohlenwasserstoffen sowie inerten Halogenkohlenwasserstoffen.

11. Verfahren nach einem der vorhergehenden Ansprüche, **dadurch gekennzeichnet, dass** man die Polymerisation durch Zugabe einer protischen Verbindung abbricht.

12. Verfahren nach einem der vorhergehenden Ansprüche, **dadurch gekennzeichnet, daß** man zur Gewinnung der Polyisobutene das Lösungsmittel bei Temperaturen von wenigstens 150°C entfernt.

13. Verwendung von Verbindungen der allgemeinen Formel I-C 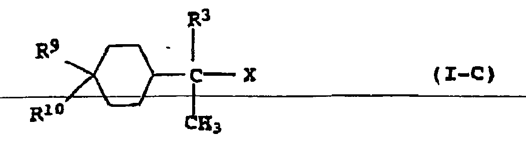
worin X, R³ und R¹⁰ die zuvor genannten Bedeutungen aufweisen und R⁹ für X steht,
zusammen mit wenigstens einer Lewis-Säure, zur kationischen Polymerisation von Isobuten oder isobutenhaltigen Monomermischungen oder zur Blockcopolymerisation von Isobuten mit vinylaromatischen Monomeren.

## Claims

1. A process for the preparation of polyisobutenes in which at least 60 mol % of the polymer chains have at least one olefinically unsaturated terminal group, by cationic polymerization of isobutene or isobutene-containing monomer mixtures in the condensed phase, wherein the polymerization is carried out in the presence of an initiator system comprising
i) a Lewis acid selected from titanium (IV) chloride and boron trichloride and
ii) at least one organic compound I having at least one functional group FG, 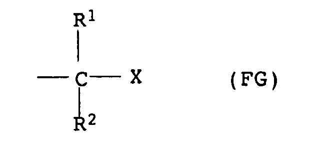
where
X is selected from halogen, C₁-C₆-alkoxy and C₁-C₆-acyloxy,
R¹ is hydrogen or methyl and
R² is methyl or forms a C₅- or C₆-cycloalkyl ring together with R¹ or with the moiety to which the functional group FG is bonded, and R² may also be hydrogen if the functional group FG is bonded to an aromatic or olefinically unsaturated carbon atom,
which forms a carbocation or a cationic complex under the polymerization conditions, in which the organic compound I is selected from compounds of the general formulae I-A to I-D: 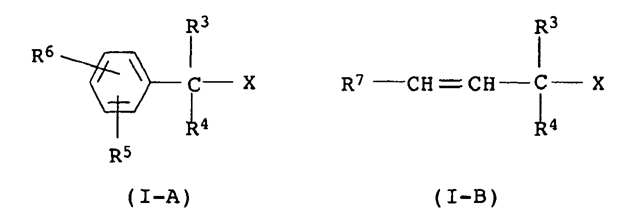 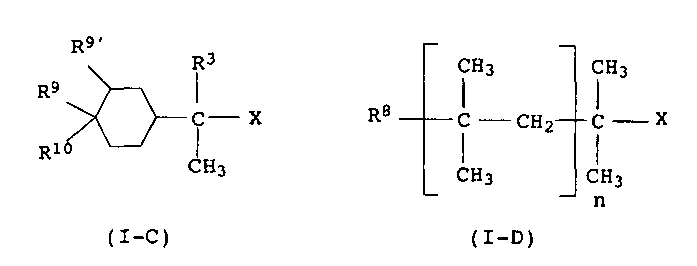
where X has the abovementioined meanings,
n is 0, 1, 2, 3, 4 or 5,
R³, R⁴ and R¹⁰, independently of one another, are each hydrogen or methyl,
R⁵, R⁶ and R⁷, independently of one another, are each hydrogen, C₁-C₄-alkyl or a group CR³R⁴-X, where R³, R⁴ and X have the abovementioned meanings, and
R⁸ is hydrogen, methyl or a group X and
R⁹ and R⁹' are each hydrogen or a group X,
in a solvent inert toward the Lewis acid, the Lewis acid being used in less than the stoichiometric amount, based on the functional groups FG of the compound I.

2. The process according to claim 1, wherein the compound I is used in an amount of from 10⁻⁵ to 10⁻¹ mol, based on the functional groups FG of the compound I, per mole of isobutene.

3. The process according to any of the preceding claims, wherein the concentration of the Lewis acid in the reaction batch is from 0.01 to 0.3 mol/l.

4. The process according to any of the preceding claims, wherein the initiator system additionally comprises at least one aprotic polar compound II which is suitable for complex formation with the Lewis acid or with the carbocation or cationic complex of Lewis acid and compound I, which carbocation or cationic complex is formed under the reaction conditions.

5. The process according to claim 4, wherein the compound II is selected from pyridine and alkylpyridines.

6. The process according to either of claims 4 and 5, wherein the compound II and the compound I are used in a molar ratio of from 10:1 to 1:20, based on the functional groups FG of the compound I.

7. The process according to any of the preceding claims, wherein the polymerization is carried out at below 0°C.

8. The process according to claim 7, wherein the polymerization is carried out at a temperature of from -30 to -120°C.

9. The process according to claim 8, wherein the polymerization is carried out at a temperature of from -40 to -110°C.

10. The process according to any of the preceding claims, wherein the solvent is selected from aliphatic and cycloaliphatic hydrocarbons and inert halohydrocarbons.

11. The process according to any of the preceding claims, wherein the polymerization is stopped by adding a protic compound.

12. The process according to any of the preceding claims, wherein the solvent is removed at temperatures of at least 150°C in order to obtain the polyisobutenes.

13. The use of a compound of the general formula I-C 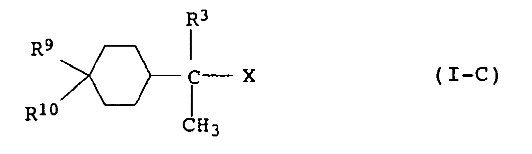
where X, R³ and R¹⁰ have the abovementioned meanings and R⁹ is X,
together with at least one Lewis acid, for the cationic polymerization of isobutene or isobutene-containing monomer mixtures or for the block copolymerization of isobutene with vinylaromatic monomers.

## Revendications

1. Procédé de préparation de polyisobutènes, dans lesquels au moins 60 moles % des chaînes de polymère présentent au moins un groupe terminal oléfiniquement insaturé, par polymérisation cationique d'isobutène ou de mélanges de monomères contenant de l'isobutène dans une phase condensée, **caractérisé en ce qu'**on effectue, dans un solvant inerte vis-à-vis de l'acide de Lewis, la polymérisation en présence d'un système d'amorceur, comprenant :
i) un acide de Lewis choisi parmi du chlorure de titane (IV) et du trichlorure de bore, et
ii) au moins un composé organique I comportant au moins un groupe fonctionnel FG : 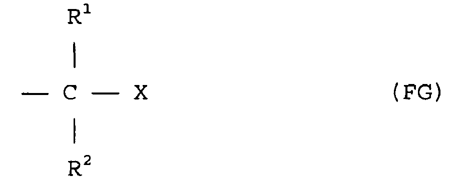
dans lequel
X est choisi parmi de l'halogène et un groupe alcoxy en C₁-C₆ et acyloxy en C₁-C₆,
R¹ représente de l'hydrogène ou du méthyle, et
R² représente du méthyle, ou forme avec R¹ ou la partie de molécule sur laquelle le groupe fonctionnel FG est fixé, un noyau de cycloalkyle en C₅-C₆, R² pouvant aussi représenter de l'hydrogène lorsque le groupe fonctionnel FG est fixé sur un atome de C aromatique ou oléfiniquement insaturé,
qui, dans des conditions de polymérisation, forme un carbocation ou un complexe cationogène, le composé organique I étant choisi parmi les composés des formules générales I-A à I-D : 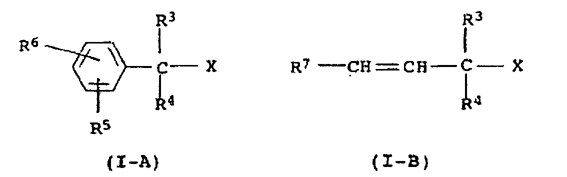 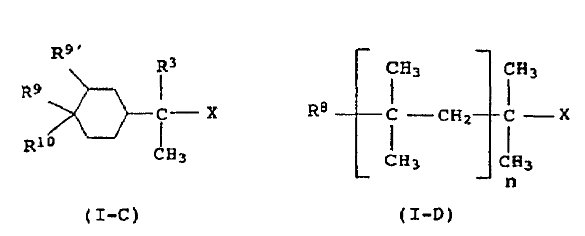
dans lesquelles X a la signification donnée précédemment,
n vaut 1, 2, 3, 4 ou 5,
R³, R⁴ et R¹⁰ représentent, indépendamment l'un de l'autre, de l'hydrogène ou du méthyle,
R⁵, R⁶ et R⁷ représentent, indépendamment l'un de l'autre, de l'hydrogène, un groupe alkyle en C₁-C₄ ou un groupe CR³R⁴-X, où R³, R⁴ et X ont les significations données précédemment, et
R⁸ représente de l'hydrogène, du méthyle ou un groupe X, et
R⁹ et R⁹' représentent de l'hydrogène ou un groupe X,
l'acide de Lewis étant mis en oeuvre dans une quantité inférieure à la quantité stoechiométrique par rapport aux groupes fonctionnels FG du composé I.

2. Procédé suivant la revendication 1, **caractérisé en ce qu'**on met en oeuvre le composé I en une quantité de 10⁻⁵ à 10⁻¹ mole, rapportée aux groupes fonctionnels FG du composé I, par mole d'isobutène.

3. Procédé suivant l'une des revendications précédentes, **caractérisé en ce que** la concentration de l'acide de Lewis dans la masse réactionnelle est de l'ordre de 0,01 à 0,3 mole/litre.

4. Procédé suivant l'une des revendications précédentes, **caractérisé en ce que** le système d'amorceur présente en supplément au moins un composé polaire aprotique II, qui est approprié pour une complexation avec l'acide de Lewis ou le carbocation ou le complexe cationogène à base d'acide de Lewis et du composé I, formés dans des conditions réactionnelles.

5. Procédé suivant la revendication 4, **caractérisé en ce que** le composé II est choisi parmi de la pyridine et des alkylpyridines.

6. Procédé suivant l'une des revendications 4 et 5, **caractérisé en ce qu'**on met en oeuvre le composé II et le composé I dans un rapport molaire de l'ordre de 10/1 à 1/20, rapporté aux groupes fonctionnels FG du composé I.

7. Procédé suivant l'une des revendications précédentes, **caractérisé en ce qu'**on effectue la polymérisation à des températures inférieures à 0°C.

8. Procédé suivant la revendication 7, **caractérisé en ce qu'**on effectue la polymérisation à une température de l'ordre de -30 à -120°C.

9. Procédé suivant la revendication 8, **caractérisé en ce qu'**on effectue la polymérisation à une température de l'ordre de -40 à -110°C.

10. Procédé suivant l'une des revendications précédentes, **caractérisé en ce que** le solvant est choisi parmi des hydrocarbures aliphatiques et cycloaliphatiques ainsi que des hydrocarbures halogénés inertes.

11. Procédé suivant l'une des revendications précédentes, **caractérisé en ce qu'**on interrompt la polymérisation par addition d'un composé protique.

12. Procédé suivant l'une des revendications précédentes, **caractérisé en ce que**, pour la production des polyisobutènes, on élimine le solvant à des températures d'au moins 150°C.

13. Utilisation de composés de la formule générale I-C : 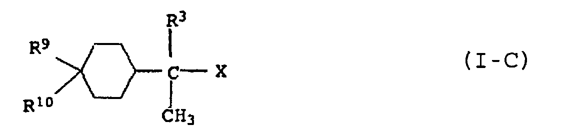
dans laquelle X, R³ et R¹⁰ présentent les significations données précédemment et R⁹ représente X,
conjointement avec au moins un acide de Lewis, pour une polymérisation cationique d'isobutène ou de mélanges de monomères contenant de l'isobutène ou pour une copolymérisation bloc d'isobutène avec des monomères vinyl-aromatiques.
